# EUROPEAN PATENT SPECIFICATION

(11) **EP 3 855 053 B1**
(45) Date of publication and mention of the grant of the patent: **13.09.2023**
(21) Application number: 19847952.9
(22) Date of filing: 30.07.2019
(51) Int. Cl.: F16K 11/074, F16K 47/04, F16K 31/04, F25B 41/35

(54) **ELECTRIC SWITCH VALVE AND VALVE BLOCK THEREOF**
ELEKTRISCHES SCHALTVENTIL UND VENTILBLOCK DAFÜR
SOUPAPE DE COMMUTATION ÉLECTRIQUE ET SON BLOC DE SOUPAPE

(30) Priority: 07.08.2018 CN 201810889111
(43) Date of publication of application: 28.07.2021
(73) Proprietor: Zhejiang Sanhua Intelligent Controls CO., Ltd., Shaoxing, Zhejiang 312500 (CN)
(72) Inventor: TANG, Hanwei, Shaoxing, Zhejiang 312500 (CN); CHEN, Bin, Shaoxing, Zhejiang 312500 (CN)
(74) Representative: Maikowski & Ninnemann Patentanwälte Partnerschaft mbB
(86) International application number: PCT/CN2019/098296
(87) International publication number: WO 2020/029830

(56) References cited:
- CN-A- 102 116 381
- CN-A- 103 016 791
- CN-A- 105 485 400
- CN-A- 105 626 951
- CN-U- 204 985 849
- JP-A- H1 030 741
- US-A1- 2017 108 137

## Description

The present application claims priority to Chinese Patent Application No. 201810889111.0, titled "ELECTRIC SWITCH VALVE AND VALVE BLOCK THEREOF", filed with the China National Intellectual Property Administration on August 7, 2018.

### FIELD

The present application relates to the field of refrigeration technology, and in particular to an electric switch valve used in a refrigeration cycle device.

### BACKGROUND

In a refrigeration cycle device, such as a refrigerator, an electric switch valve is generally used as a control component for changing a flow path of a refrigerant.

The electric switch valve includes a valve seat and a housing fixed above the valve seat, and further includes a motor. A coil component of the motor is sleeved outside the housing, and a rotor component is arranged in the housing.

A valve chamber is formed inside the housing. The valve seat is provided with an inlet passage and an outlet passage, an upper end surface of the valve seat is provided with an outlet port corresponding to the outlet passage. A sliding block which is sealingly abutted against the upper end surface of the valve seat is provided on the valve seat, and the sliding block rotates synchronously under the drive of the rotor component, and cooperates with the outlet port, so as to control the opening and closing states of the outlet.

The end surface of the valve seat has multiple outlet ports, and a bottom end of the sliding block has a sealing surface, which is sealingly abutted against the upper end surface of the valve seat, and a notch. After the sliding block cooperates with the valve seat, the sliding block is rotatable. When the notch of the sliding block corresponds in position to the outlet port of the valve seat, the outlet port is in an open state, and when the sealing surface corresponds in position to the outlet port, the outlet port is in a closed state.

Document US 2017/108137 A1 discloses a valve block according to the preamble of claim 1 and a valve device including: a drive source; a turning member; a valve body, being fixed to the turning member and integrally turned with the turning member; and a valve seat, being sliding contacted with an end face of the valve body opposite to the end face of the valve body contacting with the turning member. The valve seat has at least one outflow hole for fluid passing through the valve device. The valve body has a throttle part being a minute hole that communicates with the outflow hole in a part of a turning angle of the valve body. A flow passage has an opening part provided between opposed faces of the turning member and the valve body, thus the throttle part is communicated with an inflow hole for the fluid and inflow of an individual matter having a size unable to pass through the throttle part is shielded. However, with the optimization and improvement of the refrigeration system, it is necessary to control the flow of the refrigerant more accurately, and to achieve the throttling function. The above electric switch valve can only achieve the function of switching between different outlet ports, which no longer meets the further requirements of the refrigeration system.

In view of this, how to improve the structure of the electric switch valve so that the electric switch valve can control the flow of the refrigerant more accurately and achieve the throttling function at the same time is a technical problem that needs to be solved by those skilled in the art.

### SUMMARY

An object of the present application is to provide an electric switch valve which is able to achieve the throttling function of the system while providing a refrigerant switching function.

In order to solve the above technical problems, a valve block is provided. The valve block has a cooperation portion and a notch portion. The valve block further comprises at least one throttling portion, and at least one throttling orifice is defined in a passage formed by the throttling portion. The valve block further comprises a plate-shaped portion, an upper body portion and a lower body portion. The plate-shaped portion is made of a metal material and the at least one throttling orifice is defined therein. The upper body portion and the lower body portion are formed by injection molding. The lower body portion is provided with the cooperation portion and the notch portion. The upper body portion and the lower body portion are provided with the at least one throttling portion.

An electric switch valve is further provided. The electric switch valve comprises a valve seat and said valve block. The valve seat has an upper end surface and is provided with a first outlet port and a second outlet port. The cooperation portion of the valve block is abutted against the upper end surface of the valve seat, and is configured to rotate relative to the valve seat. The notch portion of the valve block is configured to be selectively communicated with the first outlet port or the second outlet port. In the electric switch valve according to the proposed solution, by providing the throttling portion on the valve block and the throttling orifice in the passage where the throttling portion is located, in the working process of the electric switch valve, in addition to the basic function of switching the flow path, the electric switch valve can further realize the throttling function for the flow of a certain outlet according to the needs of the system.

The plate-shaped portion of the valve block provided according to the proposed solution is made of metal, which is convenient to process a throttling orifice. The valve block can be applied in the above electric switch valve, or, not limited to the electric switch valve, applied to other similar refrigeration system valve.

### BRIEF DESCRIPTION OF THE DRAWINGS

FIG. 1 is a schematic structural view of a specific embodiment of the present application;
FIG. 2 is a schematic structural view of the valve seat shown in FIG. 1;
FIG. 3 is a schematic structural view of the valve block shown in FIG. 1 as viewed from a certain perspective;
FIG. 4 is a schematic structural view of the valve block shown in FIG. 1 as viewed from another perspective;
FIG. 5 is a schematic sectional view of the valve block shown in FIG. 3;
FIG. 6 is a schematic structural view of the valve block of an electric switch valve according to a specific embodiment;
FIG. 7 is schematic structural view of the valve seat according to a second embodiment of the present application;
FIG. 8 is schematic structural view of the valve block according to a second embodiment of the present application; and
FIG. 9 is schematic sectional view of the valve block according to the second embodiment of the present application.

### DETAILED DESCRIPTION OF THE EMBODIMENTS

In order to enable those skilled in the art to better understand the technical solutions of the present disclosure, the present disclosure will be further described in detail with reference to the drawings and specific embodiments.

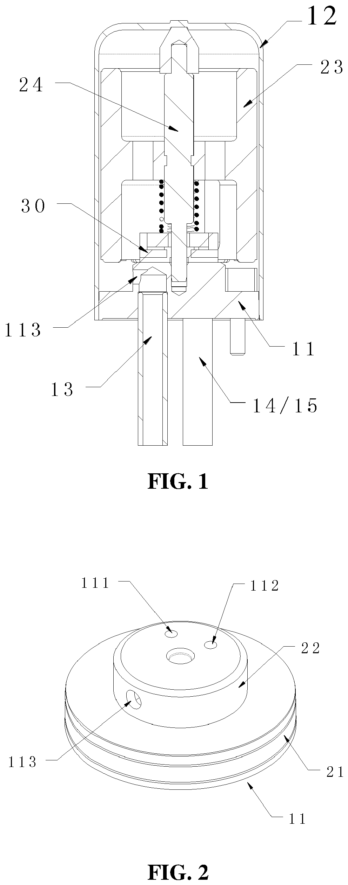

Referring to FIG. 1 and FIG. 2, FIG. 1 is a schematic structural view of an electric switch valve provided according to a specific embodiment of the present application; and FIG. 2 is a schematic structural view of the valve seat shown in FIG. 1.

As shown in the figure, the electric switch valve includes a valve seat 11 and a housing 12 fixed with the valve seat 11 for forming a sealed valve chamber.

The valve seat 11 is fixedly connected with an inlet connecting pipe 13, a first outlet connecting pipe 14 and a second outlet connecting pipe 15. The inlet connecting pipe 13, the first outlet connecting pipe 14 and the second outlet connecting pipe 15 may all be fixedly connected with the valve seat 11 by welding. The valve seat 11 is provided with an inlet port 113, a first outlet port 111, and a second outlet port 112. The inlet port 113 is defined on a side of the valve seat, and is communicated with the inlet connecting pipe. In this way, the refrigerant entering from the inlet connecting pipe 13 is able to enter the valve chamber through the inlet port 113. Those skilled in the art can understand that the function of the inlet port 113 arranged on the valve seat 11 is to communicate the inlet connecting pipe 13 with the valve chamber. Therefore, the inlet port 113 may not be arranged on the valve seat 11. For example, an opening is directly defined on a side of the housing 12 and is fixedly connected to the inlet connecting pipe 13, which can also communicate the inlet connecting pipe 13 with an interior of the valve chamber.

The first outlet port 111 and the second outlet port 112 are arranged on an upper end surface of the valve seat 11. In this embodiment, the first outlet port 111 and the second outlet port 112 are arranged on a same circle with a center axis of the valve seat 11 as the center, and are spaced apart by a certain distance. The upper end surface of the valve seat is a flat cooperation surface. The valve block 30 may abut against the upper end surface of the valve seat 11 and rotate by a certain angle. An opening which is selectively communicated with the first outlet port 111 or the second outlet port 112 is defined on the valve block 30. A rotor component 23 is provided inside the valve chamber, the rotor component 23 rotates under the drive of an electromagnetic coil (not shown in the figure), and a rotating shaft 24 fixedly connected with the rotor component 23 drives the valve block 30 to rotate on the cooperation surface of the valve seat 11. The opening and closing states of the first outlet port 111 and the second outlet port 112 and the throttling flow are controlled through the rotation of the valve block 30.

The valve seat 11 includes a support seat 21 and a valve seat body 22 fixed on the support seat 21. The two may be separately arranged and fixed by welding, or be formed by integral shaping.

In order to enable the rotor component 10 to drive the valve block 30 to rotate together when the rotor component 10 rotates, the valve block 30 may be fixed relative to the rotating shaft 24, for example, the valve block 30 is in interference fit with the rotating shaft 24.

In addition, the valve block 30 may be fixed relative to the rotor component 23, for example, a protruding key portion (not shown in the figure) is provided at a lower end of the rotor component 23, and a key groove cooperating with the key portion is defined on the valve block 30. The key portion is engaged and fixed with the key groove, so that the rotor component is fixed relative to the valve block 30. The advantage of this arrangement is that, the key portion of the rotor component is embedded in the key groove, which can press the valve block 30 against the valve seat 11 to a certain extent, and can ensure that the valve block 30 is abutted against the valve seat 11, so as to prevent the refrigerant from flowing in through the junction of the two.

The specific structure of the valve block 30 in the present application is described in detail with reference to a specific embodiment.

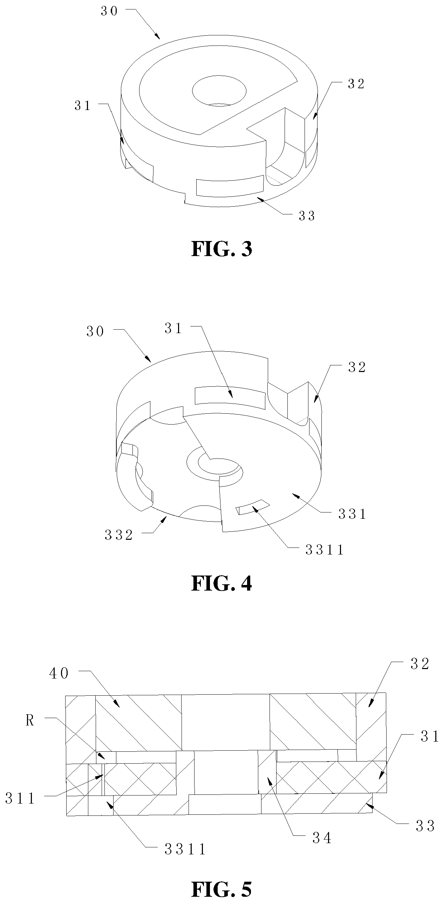

Referring to FIGS. 3 to 5, FIG. 3 is a schematic structural view of the valve block shown in FIG. 1 as viewed from a certain perspective; FIG. 4 is a schematic structural view of the valve block shown in FIG. 1 as viewed from another perspective; and FIG. 5 is a schematic sectional view of the valve block shown in FIG. 3.

In this embodiment, the valve block 30 includes a plate-shaped portion 31, an upper body portion 32 located above a top surface of the plate-shaped portion 31 and a lower body portion 33 located below a bottom surface of the plate-shaped portion 31, and the plate-shaped portion 31, the upper body portion 32 and the lower body portion 33 are fixed as whole. The lower body portion 33 includes a cooperation portion 331 and a notch portion 332. The cooperation portion 331 is configured to form sliding fit with the cooperation surface of the valve seat 11. When the cooperation portion 331 covers the first outlet port 111 or the second outlet port 112 of the valve seat 11, the first outlet port 111 or the second outlet port 112 is accordingly in a closed state, and the refrigerant cannot flow out from the first outlet port 111 or the second outlet port 112. On the contrary, when the cooperation portion 331 does not cover the outlet port, the notch portion 332 corresponds to the outlet port, and the outlet port is in a communicated state at this time. As for the specific shapes of the cooperation portion 331 and the notch portion 332, various equivalent substitutions can be made according to different usage requirements to achieve corresponding functions.

The plate-shaped portion 31, the upper body portion 32 and the lower body portion 33 may be made of different materials according to the structure requirements. In this embodiment, the plate-shaped portion 31 is made of a material which is convenient for processing and cutting, and the upper body portion 32 and the lower body portion 33 are made of engineering plastic by injection molding. Specifically, the plate-shaped portion 31 may be used as an insert, and the upper body portion 32 and the lower body portion 33 may be made of engineering plastics by injection molding in a mold. In this specification, for the convenience of description, the various parts of the valve block 30 are respectively named as the plate-shaped portion 31, the upper body portion 32 and the lower body portion 33 with the plate-shaped portion 31 as the boundary. In fact, the upper body portion and the lower body portion are partially connected together, and are not completely separately by the plate-shaped portion 31.

The valve block 30 is provided with a penetrated throttling portion 3311. A distance between the throttling portion 3311 and a center axis of the valve block 30 is configured such that: when the valve block 30 rotates by a certain angle, the throttling portion 3311 can correspond to the first outlet port 111 or the second outlet port in position. The throttling portion 3311 is blocked by the plate-shaped portion 31 in an extending direction of the throttling portion 3311, and a throttling orifice 311 is defined in the plate-shaped portion 31. In this way, when the throttling portion 3311 rotates to a position corresponding to a certain outlet port, the refrigerant flows in from the throttling portion 3311, and enters the outlet port and the corresponding outlet connecting pipe only through the throttling orifice 311 defined in the plate-shaped portion 31, thereby realizing the throttling function for the corresponding outlet connecting pipe.

It should be noted that the throttling portion 3311 is not required to have a uniform diameter and be coaxially penetrated. Those skilled in the art can understand that the same object can be achieved by providing passages respectively in the lower body portion 33 and the upper body portion 32, forming a penetration between the lower body portion 33 and the upper body portion 32, and situating the throttling orifice 311 of the plate-shaped portion between the two passages.

With the above design, a surface of the valve block 30 which is abutted against the cooperation surface of the valve seat 11 is the cooperation portion 331 of the lower body portion 33, and the throttling portion 3311 is directly communicated with the valve chamber. It can be understood that, in this embodiment, the throttling orifice 311 defined in the plate-shaped portion 31 is communicated with the valve chamber through the throttling portion 3311.

The valve block 30 provided according to this embodiment is made of two materials. The throttling orifice 311 is defined in the plate-shaped portion 31. Since the plate-shaped portion 31 is made of a material which is convenient for processing and cutting, such as a metal material, which is more conductive to the processing of the throttling orifice 311 with a small aperture compared with engineering plastic. The upper body portion 32 and the lower body portion 33 are integrally formed on the plate-shaped portion 31 by injection molding, so as to ensure the wear resistance of the valve block 30. Since the throttling orifice 311 is defined in the plate-shaped portion 31, the throttling portion 3311 may have a relatively large size, so as to avoid directly processing an throttling orifice with a small aperture in the plastic, which not only improves the processing accuracy, but also avoids the burr left by orifice processing in the plastic, thereby preventing the blockage during the rotation of the valve block. The present application does not exclude that the throttling orifice 311 is directly processed in the valve block 30.

In this embodiment, the valve device is further provided with a filter component 40. The filter component 40 is configured to filter the refrigerant flowing through the throttling orifice 311 of the valve block 30 to prevent the throttling orifice 311 from being blocked by foreign matter and prevent the performance of the product from being affected.

In addition, the filtering capacity of the filter component 40 may be determined according to the aperture of the throttling orifice 311 and other use requirements. For example, if the aperture of the throttling orifice 311 ranges from 0.1mm to 0.3mm, the filter component 40 can at least filter out impurities and foreign matters larger than 0.1mm during application. In the specific arrangement, the number of meshes of the filter component 40 may be greater than 100, so as to meet the basic usage requirement.

Specifically, the filter component 40 may be formed by sintering spherical bronze powder or spherical stainless steel powder, or may be made of multiple layers of stainless steel mesh.

It can be understood that, with a flow direction of the refrigerant as a reference, the filter component 40 should be arranged at an upstream position of the throttling orifice 311 of the valve block 30. In a specific solution, the filter component 40 is embedded in the upper body portion 32 of the valve block 30, and a predetermined distance is reserved between the filter component 40 and the top surface of the plate-shaped portion 31. In this way, the filter component 40, the plate-shaped portion 31, and the upper body portion 32 together define a receiving chamber R. The refrigerant in the valve chamber flows into the receiving chamber R after being filtered by the filter component 40, and then flows out through the throttling orifice 311 and the corresponding outlet port.

In actual arrangement, the predetermined distance between the filter component 40 and the top surface of the plate-shaped portion 31 may be set as required.

In a specific solution, the plate-shaped portion 31 has a center through hole communicated with a penetrated cavity 321, and the valve block 30 further includes a sleeve portion 34 which is fixedly embedded in the center through hole of the plate-shaped portion 31. The sleeve portion 34 protrudes from the top surface of the plate-shaped portion 31 so as to support the filter component 40, which facilitates the fixation of the relative position between the filter component 40 and the valve block 30. Apparently, a height of the sleeve portion 34 protruding from the top surface of the plate-shaped portion 31 is the distance between the filter component 40 and the top surface of the plate-shaped portion 31, that is, the predetermined distance.

In a specific solution, the upper body portion 32, the lower end portion 33 and the sleeve portion 34 are integrally formed on the plate-shaped portion 31 by injection molding. In other words, the upper body portion 32, the lower body portion 33 and the sleeve portion 34 are integrally formed by injection molding with the plate-shaped portion 31 as a base, which is equivalent to wrapping most of the plate-shaped portion 31 in the valve block 30.

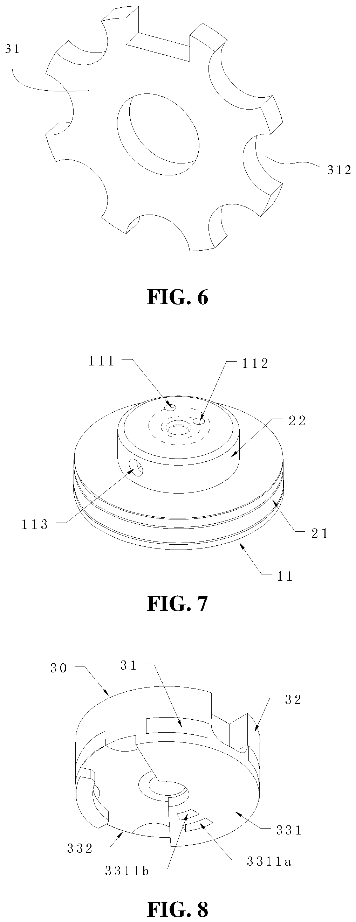

Referring to FIG. 6, FIG. 6 is a schematic structural view of the plate-shaped portion of the valve block in the first embodiment, and it is the structure of the plate-shaped portion, where the throttling orifice is not yet processed, shown in the figure.

Specifically, multiple through holes 312 are defined on an outer circumference of the plate-shaped portion 31, and the upper body portion 32 and the lower body portion 33 are formed at a transition portion of the through holes 312 by injection molding into an integral structure, which can improve the reliability of fixation of the upper body portion 32, the lower body portion 33 with the plate-shaped portion 31.

More specifically, the multiple through holes 312 are evenly distributed along the outer circumference of the plate-shaped portion 31.

In actual arrangement, the through holes 312 may be defined in other positions of the plate-shaped portion 31, such as an inner circumference, as long as the throttling orifice 311 is not interfered.

In a specific solution, the plate-shaped portion 31 may be made of other material such as brass or aluminum. Both brass and aluminum are cutting materials which are easy to process, and are beneficial to the improvement of the processing technology of the plate-shaped portion 31. In practice, the plate-shaped portion 31 may also be made of other cutting materials which are easy to process. It can be understood that the easy-cutting materials are preferred, so as to improve the processing technology.

The upper body portion 32 and the lower body portion 33 may specifically be PPS engineering plastic or PEEK engineering plastic, which can ensure a low friction coefficient and low wear of the valve block 30.

The valve block 30 in this embodiment may be made in the following way: first, a body of the plate-shaped portion 31 is made by mechanical processing; the body of the plate-shaped portion 31 is a structure without the throttling orifice 311, so as to avoid affecting the throttling orifice 311 during the subsequent injection molding; then, the upper body portion 32, the lower body portion 33 and the sleeve portion 34 are integrally formed on the plate-shaped portion 31 by injection molding, and a throttling portion communication aperture 331 is formed during injection molding; finally, the throttling orifice 311 is formed in the body of the plate-shaped portion 31.

The design of the throttling portion 3311 on the lower body portion 33 corresponding to the throttling orifice 311, on one hand, aims to communicate the throttling orifice 311 with the outlet port, and on the other hand, the design that a size of the throttling portion 3311 is greater than a size of the throttling orifice 311 not only improves the technology of injection molding, but also avoids the wear caused by friction between the valve block 30 and the valve seat 11 during the rotation of the valve block 30, or avoids the blockage of the throttling orifice 311 by impurities, so as to ensure the reliability of flow control of the product.

In the electric switch valve provided according to this embodiment, the valve block 30 is driven by the rotor component to rotate on the upper surface of the valve seat 11, so that the cooperation portion 331 of the valve block 30 abuts against the upper surface of the valve seat 11, and the notch portion 311 of the valve block 30 can selectively communicate with the first outlet port 111 and the second outlet port 112, thereby realizing the switching of the flow path of the refrigerant. The selective communication described here can be alternative communication or simultaneous communication or all non-communication. In addition, since the valve block 30 is further provided with the throttling portion 3311 and the throttling orifice 311 defined in the plate-shaped portion 31 of the valve block 30, the throttling function can be realized for the corresponding outlet port when the valve block 30 rotates to a specific position (the specific position may be determined according to the requirement of the system).

The second embodiment is described with reference to the accompanying drawings.

The main difference between the second embodiment and the first embodiment lies in the arrangement of the outlet port of the valve seat 11 and the structure of the valve block. The structures of other components of the electric switch valve can be understood with reference to the first embodiment, and will not be repeated here.

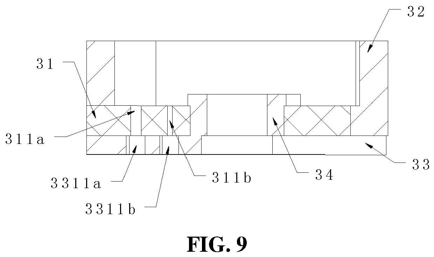

Referring to FIGS. 7, 8 and 9, FIG. 7 is schematic structural view of the valve seat according to the second embodiment of the present application; FIG. 8 is schematic structural view of the valve block according to the second embodiment of the present application; and FIG. 9 is schematic sectional view of the valve block according to the second embodiment of the present application.

In order to facilitate understanding, the same reference numerals are used to describe the components in the second embodiment that have the same functions as the components in the first embodiment. In this embodiment, the first outlet port 111 and the second outlet port are arranged on different circles with a center axis of the valve seat 11 as the center and with different radii, and are spaced apart by a certain distance. The upper end surface of the valve seat 11 is a flat cooperation surface. The valve block 30 may abut against the upper end surface of the valve seat 11 and rotate by a certain angle.

The valve block 30 includes a plate-shaped portion 31, an upper body portion 32 located above a top surface of the plate-shaped portion 31 and a lower body portion 33 located below a bottom surface of the plate-shaped portion 31, and the plate-shaped portion 31, the upper body portion 32 and the lower body portion 33 are fixed as whole. The lower body portion includes a cooperation portion 331 and a notch portion 332. The cooperation portion 331 is configured to form sliding fit with the cooperation surface of the valve seat 11. When the cooperation portion 331 covers the first outlet port 111 or the second outlet port 112 of the valve seat 11, the first outlet port 111 or the second outlet port 112 is accordingly in a closed state, and the refrigerant cannot flow out from the first outlet port 111 or the second outlet port 112. On the contrary, when the cooperation portion 331 does not cover the outlet port, the notch portion 332 corresponds to the outlet port, and the outlet port is in a communicated state at this time. As for the specific shapes of the cooperation portion 331 and the notch portion 332, various equivalent substitutions can be made according to different usage requirements to achieve corresponding functions.

The plate-shaped portion 31, the upper body portion 32 and the lower body portion 33 may be made of different materials according to the structure requirements. In this embodiment, the plate-shaped portion 31 is made of a material which is convenient for processing and cutting, and the upper body portion 32 and the lower body portion 33 are made of engineering plastic by injection molding. Specifically, the plate-shaped portion 31 may be used as an insert, and the upper body portion 32 and the lower body portion 33 may be made of engineering plastics by injection molding in a mold. In this specification, for the convenience of description, the various parts of the valve block 30 are respectively named as the plate-shaped portion 31, the upper body portion 32 and the lower body portion 33 with the plate-shaped portion 31 as the boundary. In fact, the upper body portion and the lower body portion are partially connected together, and are not completely separately by the plate-shaped portion 31.

The valve block 30 is provided with a first throttling portion 3311a and a second throttling portion 3311b that are penetrated, and a distance between the first throttling portion 3311a and a center axis of the valve block is adapted to a distance between the first outlet port 111 arranged on the valve seat 11 and a center axis of the valve seat 11 (the valve seat 11 and the valve block 30 may be arranged coaxially). A distance between the second throttling portion 3311b and the center axis of the valve block 30 is adapted to a distance between the second outlet port 112 arranged on the valve seat 11 and the center axis of the valve seat 11.

In this embodiment, the first throttling portion 3311a and the second throttling portion 3311b are located on the same straight line with the center point of the valve block 30. The first throttling portion 3311a and the second throttling portion 3311b may also be arranged in a staggered manner according to actual needs.

In this way, when the valve block 30 rotates by a certain angle, the first throttling portion 3311a can correspond to the first outlet port 111 in position. When the valve block 30 further rotates by a certain angle, the second throttling portion 3311b can correspond to the second outlet port 112 in position.

The first throttling portion 3311a and the second throttling portion 3311b are blocked by the plate-shaped portion 31 in an extending direction, and a first throttling orifice 311a and a second throttling orifice 311b are respectively defined in the plate-shaped portion 31. In this way, when the first throttling portion 3311a rotates to a position corresponding to the first outlet port 111, the refrigerant flows in from the first throttling portion 3311a, and enters the first outlet port 111 and the corresponding first outlet connecting pipe 13 only through the first throttling orifice 311a defined in the plate-shaped portion 31, thereby realizing the throttling function for the corresponding outlet connecting pipe. When the second throttling portion 3311b rotates to a position corresponding to the second outlet port 112, the refrigerant flows in from the first throttling portion 3311a, and enters the second outlet port 112 and the corresponding second outlet connecting pipe 14 only through the second throttling orifice 311b defined in the plate-shaped portion 31, thereby realizing the throttling function for the second outlet connecting pipe.

Those skilled in the art can understand that the filter component 40 and the receiving chamber R formed between the filter component 40 and the valve block 30 described in the first embodiment may be formed in this embodiment in the same manner.

In the electric switch valve provided according to this embodiment, the valve block 30 is driven by the rotor component to rotate on the upper surface of the valve seat 11, so that the cooperation portion 331 of the valve block 30 abuts against the upper surface of the valve seat 11, and the notch portion 311 of the valve block 30 can selectively communicate with the first outlet port 111 and the second outlet port 112, thereby realizing the switching of the flow path of the refrigerant. The selective communication described here can be alternative communication or simultaneous communication or all non-communication. In addition, since the valve block 30 is further provided with the first throttling portion 3311a, the second throttling portion 3311b, and the first throttling orifice 311a and the second throttling orifice 311b defined in the plate-shaped portion 31 of the valve block 30, the first throttling orifice 311a or the second throttling orifice 311b realizes the throttling function for the corresponding outlet port when the valve block 30 rotates to a specific position (the specific position may be determined according to the requirement of the system). Since the first outlet port 111 and the second outlet port 112 are located on circles with different radii, various combination of throttling flow may be made to meet the requirements of the refrigeration system.

It should be noted that, the orientation terms, such as upper, lower, top and bottom, involved in this application are defined with reference to the positions of the components and the relative positions of the components as shown in FIG. 1, which are only for clarity and ease of describing the technical solutions. It should be understood that the orientation terms used in this application should not limit the scope of protection of this application.

The electric switch valve provided according to the present application has been described in detail hereinbefore. The embodiments of the present application are illustrated herein by specific examples. The above description of examples is only intended to facilitate the understanding of the present application. It should be noted that, for those skilled in the art, many modifications and improvements may be made to the present disclosure without departing from the scope of the present disclosure, and these modifications and improvements are also deemed to fall into the protection scope of the present disclosure defined by the claims.

## Claims

1. A valve block (30), wherein the valve block (30) has a cooperation portion (331) and a notch portion (332); the valve block (30) further comprises at least one throttling portion (3311), and at least one throttling orifice (311) is defined in a passage formed by the at least one throttling portion (3311);
wherein
the valve block (30) further comprises an upper body portion (32) and a lower body portion (33);
the upper body portion (32) and the lower body portion (33) are formed by injection molding; the lower body portion (33) is provided with the cooperation portion (331) and the notch portion (332); and
the upper body portion (32) and the lower body portion (33) are provided with the at least one throttling portion (3311);
**characterized in that**
the valve block (30) further comprises a plate-shaped portion (31) made of a metal material and the at least one throttling orifice (311) is defined therein.

2. An electric switch valve, comprising a valve seat (11) and the valve block (30) according to claim 1, wherein the valve seat (11) has an upper end surface and is provided with a first outlet port (111) and a second outlet port (112);
the cooperation portion (331) of the valve block (30) is abutted against the upper end surface of the valve seat (11), and is configured to rotate relative to the valve seat (11); and
the notch portion (332) of the valve block (30) is configured to be selectively communicated with the first outlet port (111) or the second outlet port (112).

3. The electric switch valve according to claim 2, wherein the first outlet port (111) and the second outlet port (112) are arranged on a same circle with a center axis of the valve seat (11) as the center, and are spaced apart by a distance.

4. The electric switch valve according to claim 3, wherein one throttling portion (3311) is provided, and one throttling orifice (311) is defined.

5. The electric switch valve according to claim 2, wherein the first outlet port (111) and the second outlet port (112) are arranged on different circles with a center axis of the valve seat (11) as the center and with different radii, and are spaced apart by a distance.

6. The electric switch valve according to claim 5, wherein the throttling portion (3311) comprises a first throttling portion (3311a) and a second throttling portion (3311b), a first throttling orifice (311a) is defined in a passage formed by the first throttling portion (3311a), and a second throttling orifice (311b) is defined in a passage formed by the second throttling portion (3311b).

7. The electric switch valve according to claim 2, wherein the valve block (30) further comprises a filter component (40), the filter component (40) is embedded in the upper body portion (32) and has a predetermined distance from the plate-shaped portion (31), and the filter component (40), the plate-shaped portion (31) and the upper body portion (32) together define a receiving chamber (R).

8. The electric switch valve according to claim 7, wherein the valve block (30) further comprises a sleeve portion (34), and the sleeve portion (34) is integrally formed with the upper body portion (32) and the lower body portion (33) by injection molding.

9. The electric switch valve according to claim 2, wherein a plurality of through holes (312) are defined on an outer circumference of the plate-shaped portion (31), and the through holes (312) are evenly distributed along the outer circumference of the plate-shaped portion (31).

## Patentansprüche

1. Ventilblock (30), wobei der Ventilblock (30) einen Kooperationsabschnitt (331) und einen Kerbabschnitt (332) aufweist; der Ventilblock (30) ferner zumindest einen Drosselabschnitt (3311) aufweist, und zumindest eine Drosselöffnung (311) in einem durch den zumindest einen Drosselabschnitt (3311) gebildeten Durchgang definiert ist,
wobei der Ventilblock (30) ferner einen oberen Körperabschnitt (32) und einen unteren Körperabschnitt (33) aufweist;
der obere Körperabschnitt (32) und der untere Körperabschnitt (33) durch Spritzgießen gebildet sind; der untere Körperabschnitt (33) mit dem Kooperationsabschnitt (331) und dem Kerbabschnitt (332) versehen ist; und
der obere Körperabschnitt (32) und der untere Körperabschnitt (33) mit dem zumindest einen Drosselabschnitt (3311) versehen sind;
**dadurch gekennzeichnet, dass**
der Ventilblock (30) ferner einen plattenförmigen Abschnitt (31) aufweist, der aus einem Metallmaterial hergestellt ist, und die zumindest eine Drosselöffnung (311) darin definiert ist.

2. Elektrisches Schaltventil, aufweisend einen Ventilsitz (11) und den Ventilblock (30) gemäß Anspruch 1, wobei der Ventilsitz (11) eine obere Endfläche aufweist und mit einer ersten Auslassöffnung (111) und einer zweiten Auslassöffnung (112) versehen ist;
der Kooperationsabschnitt (331) des Ventilblocks (30) an der oberen Endfläche des Ventilsitzes (11) anliegt und derart konfiguriert ist, dass er sich relativ zu dem Ventilsitz (11) dreht; und
der Kerbabschnitt (332) des Ventilblocks (30) derart konfiguriert ist, dass er wahlweise mit der ersten Auslassöffnung (111) oder der zweiten Auslassöffnung (112) in Verbindung steht.

3. Elektrisches Schaltventil gemäß Anspruch 2, wobei die erste Auslassöffnung (111) und die zweite Auslassöffnung (112) auf einem gleichen Kreis mit einer Mittelachse des Ventilsitzes (11) als Mittelpunkt angeordnet sind und um einen Abstand voneinander beabstandet sind.

4. Elektrisches Schaltventil gemäß Anspruch 3, wobei ein Drosselabschnitt (3311) vorgesehen ist und eine Drosselöffnung (311) definiert ist.

5. Elektrisches Schaltventil gemäß Anspruch 2, wobei die erste Auslassöffnung (111) und die zweite Auslassöffnung (112) auf unterschiedlichen Kreisen mit einer Mittelachse des Ventilsitzes (11) als Mittelpunkt und mit unterschiedlichen Radien angeordnet sind und um einen Abstand voneinander beabstandet sind.

6. Elektrisches Schaltventil gemäß Anspruch 5, wobei der Drosselabschnitt (3311) einen ersten Drosselabschnitt (3311a) und einen zweiten Drosselabschnitt (3311b) aufweist, eine erste Drosselöffnung (311a) in einem von dem ersten Drosselabschnitt (3311a) gebildeten Durchgang definiert ist, und eine zweite Drosselöffnung (311b) in einem von dem zweiten Drosselabschnitt (331 1b) gebildeten Durchgang definiert ist.

7. Elektrisches Schaltventil gemäß Anspruch 2, wobei der Ventilblock (30) ferner eine Filterkomponente (40) aufweist, die Filterkomponente (40) in den oberen Körperabschnitt (32) eingebettet ist und einen vorbestimmten Abstand von dem plattenförmigen Abschnitt (31) aufweist, und die Filterkomponente (40), der plattenförmige Abschnitt (31) und der obere Körperabschnitt (32) gemeinsam eine Aufnahmekammer (R) definieren.

8. Elektrisches Schaltventil gemäß Anspruch 7, wobei der Ventilblock (30) ferner einen Hülsenabschnitt (34) aufweist und der Hülsenabschnitt (34) mit dem oberen Körperabschnitt (32) und dem unteren Körperabschnitt (33) einstückig durch Spritzgießen ausgebildet ist.

9. Elektrisches Schaltventil gemäß Anspruch 2, wobei eine Vielzahl von Durchgangslöchern (312) an einem Außenumfang des plattenförmigen Abschnitts (31) definiert sind und die Durchgangslöcher (312) gleichmäßig entlang des Außenumfangs des plattenförmigen Abschnitts (31) verteilt sind.

## Revendications

1. Bloc de soupape (30), dans lequel le bloc de soupape (30) comprend une partie de coopération (331) et une partie d'encoche (332) ; le bloc de soupape (30) comprend en outre au moins une partie d'étranglement (3311), et au moins une ouverture d'étranglement (311) est définie dans un passage formé par l'au moins une partie d'étranglement (3311) ;
dans lequel le bloc de soupape (30) comprend en outre une partie de corps supérieure (32) et une partie de corps inférieure (33) ;
la partie de corps supérieure (32) et la partie de corps inférieure (33) sont formées par moulage par injection ; la partie de corps inférieure (33) est fournie avec la partie de coopération (331) et la partie d'encoche (332) ; et
la partie de corps supérieure (32) et la partie de corps inférieure (33) sont fournies avec l'au moins une partie d'étranglement (3311) ;
**caractérisé en ce que**
le bloc de soupape (30) comprend en outre une partie en forme de plaque (31) composée d'un matériau en métal et l'au moins une ouverture d'étranglement (311) est définie dans celle-ci.

2. Soupape à commutation électrique, comprenant un siège de soupape (11) et le bloc de soupape (30) selon la revendication 1, dans laquelle le siège de soupape (11) présente une surface d'extrémité supérieure et est fourni avec un premier orifice de sortie (111) et un deuxième orifice de sortie (112) ;
la partie de coopération (331) du bloc de soupape (30) est en butée contre la surface d'extrémité supérieure du siège de soupape (11) et est configurée pour tourner par rapport au siège de soupape (11) ; et
la partie d'encoche (332) du bloc de soupape (30) est configurée pour être sélectivement en communication avec le premier orifice de sortie (111) ou le deuxième orifice de sortie (112).

3. Soupape à commutation électrique selon la revendication 2, dans laquelle le premier orifice de sortie (111) et le deuxième orifice de sortie (112) sont disposés sur un même cercle avec un axe central du siège de soupape (11) en tant que le centre et sont espacés l'un de l'autre d'une distance.

4. Soupape à commutation électrique selon la revendication 3, dans laquelle une partie d'étranglement (3311) est fournie, et une ouverture d'étranglement (311) est définie.

5. Soupape à commutation électrique selon la revendication 2, dans laquelle le premier orifice de sortie (111) et le deuxième orifice de sortie (112) sont disposés sur des cercles différents avec un axe central du siège de soupape (11) en tant que le centre et avec des rayons différents, et sont espacés l'un de l'autre d'une distance.

6. Soupape à commutation électrique selon la revendication 5, dans laquelle la partie d'étranglement (3311) comprend une première partie d'étranglement (3311a) et une deuxième partie d'étranglement (3311b), une première ouverture d'étranglement (311a) est définie dans un passage formé par la première partie d'étranglement (3311a), et une deuxième ouverture d'étranglement (311b) est définie dans un passage formé par la deuxième partie d'étranglement (3311b).

7. Soupape à commutation électrique selon la revendication 2, dans laquelle le bloc de soupape (30) comprend en outre un composant filtrant (40), le composant filtrant (40) est incorporé dans la partie de corps supérieure (32) et présente une distance prédéterminée par rapport à la partie en forme de plaque (31), et le composant filtrant (40), la partie en forme de plaque (31) et la partie de corps supérieure (32) définissent ensemble une chambre de réception (R).

8. Soupape à commutation électrique selon la revendication 7, dans laquelle le bloc de soupape (30) comprend en outre une partie de manchon (34), et la partie de manchon (34) est intégralement formée avec la partie de corps supérieure (32) et la partie de corps inférieure (33) par moulage par injection.

9. Soupape à commutation électrique selon la revendication 2, dans laquelle une pluralité de trous traversants (312) sont définis sur une circonférence extérieure de la partie en forme de plaque (31), et les trous traversants (312) sont répartis de manière homogène le long de la circonférence extérieure de la partie en forme de plaque (31).
